# EUROPEAN PATENT APPLICATION

(11) **EP 4 651 281 A1**
(43) Date of publication of application: **19.11.2025**
(21) Application number: 24800158.8
(22) Date of filing: 25.03.2024
(51) Int. Cl.: H01M 50/20, H01M 50/256, B65D 81/02

(54) **SECONDARY BATTERY TRAY**

(30) Priority: 04.05.2023 KR 20230058511; 14.03.2024 KR 20240035676
(71) Applicant: LG Energy Solution, Ltd., Seoul 07335 (KR)
(72) Inventor: SEO, In Jae, Daejeon 34122 (KR)
(74) Representative: Goddar, Heinz J.
(86) International application number: PCT/KR2024/003700
(87) International publication number: WO 2024/228470

(57) **Abstract**

A plurality of secondary batteries may be loaded on a secondary battery tray according to an embodiment of the present disclosure. The secondary battery tray may include a bottom portion; and a plurality of guide lips that is located above the bottom portion, is configured to erect and support the secondary battery, and faces each other. The guide lip may include a contact portion configured to contact and support the secondary battery; and a non-contact portion that is located outside the contact portion, has a thinner thickness than the contact portion, and does not contact the secondary battery.

## Description

### TECHNICAL FIELD

### CROSS-REFERENCE TO RELATED APPLICATIONS

The present application claims priority to Korean Patent Application No. 10-2023-0058511 filed on May 4, 2023 and Korean Patent Application No. 10-2024-0035676 filed on March 14, 2024 in the Republic of Korea, the disclosures of which are incorporated herein by reference.

### TECHNICAL FIELD

The present disclosure relates to a secondary battery tray on which a plurality of secondary batteries are loaded.

### BACKGROUND ART

Secondary batteries commercially available at present include nickel cadmium batteries, nickel hydrogen batteries, nickel zinc batteries, lithium secondary batteries, and the like, among which lithium secondary batteries are in the spotlight because they have almost no memory effect compared to nickel-based secondary batteries and thus have advantages of free charging and discharging, very low self-discharge rate, and high energy density. Recently, secondary batteries have been widely used not only in small devices such as portable electronic devices, but also in medium and large devices such as vehicles or energy storage systems (ESSs).

Such a lithium secondary battery mainly uses a lithium-based oxide and a carbon material as a positive electrode active material and a negative electrode active material, respectively. The lithium secondary battery includes an electrode assembly where a positive electrode plate and a negative electrode plate each coated with the positive electrode active material and the negative electrode active material are disposed with a separator interposed therebetween, and an exterior material that seals and accommodates the electrode assembly together with an electrolyte.

Once the assembly process for the secondary battery is completed, an activation process in which the secondary battery is activated by imparting electrical characteristics thereto and the tasks of stabilizing the battery and inspecting defects are carried out is being performed. The activation process may include an aging process that allows the electrolyte injected in the assembly process of the secondary battery to be well dispersed on the positive electrode plate and the negative electrode plate of the battery, a charge/ discharge process for charging and discharging the initially discharged secondary battery, an IR/OCV process for evaluating the battery quality by an analysis of the internal resistance (IR) of the secondary battery according to frequency and current, an open circuit voltage (OCV) measurement, and the like, and a selecting process for determining whether the battery cells are defective based on the data obtained through the aging process, the charge/discharge process, and the IR/OCV process, and assigning grades to the battery cells according to their quality.

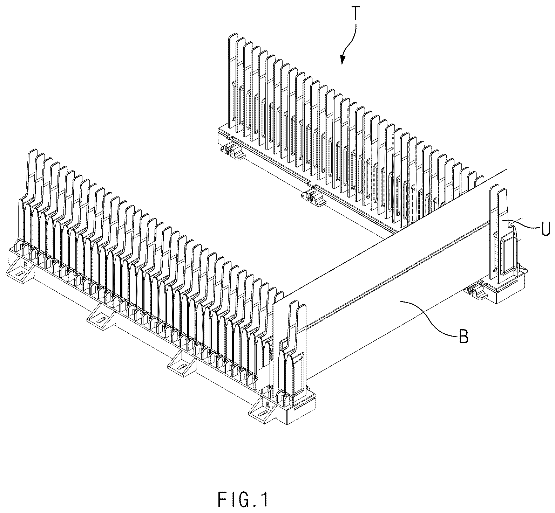

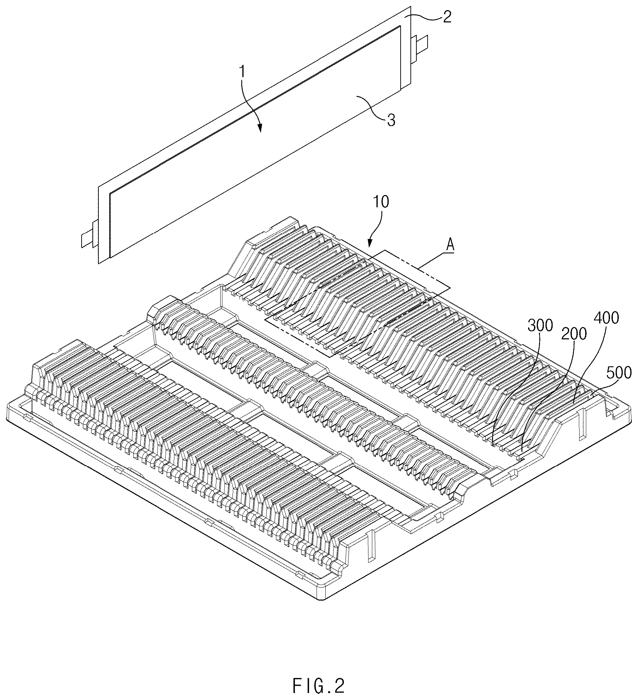

Referring to FIG. 1, since the secondary battery B prior to cutting is formed in a form where the pouch case extends long from the cup portion to the upper end in the primary activation process before the degassing and resealing processes in the activation process of the secondary battery, the holding unit U is formed so that the activation tray T may support the extended pouch case. In the secondary activation process after the degassing process, the extended pouch part of the secondary battery B prior to cutting may be cut to form a general secondary battery 1. In this case, the secondary battery tray 10 (see FIG. 2) that may erect and stably support the secondary battery 1 is used, and if a certain area of the secondary battery B prior to cutting that was pressurized by the holding unit U of the activation tray T in the primary activation process is pressurized again by the secondary battery tray 10, there is a concern that a problem of appearance defects on the secondary battery may occur.

### SUMMARY

### TECHNICAL PROBLEM

The present disclosure is designed to solve the problems of the related art, and therefore the present disclosure is directed to providing a secondary battery tray capable of minimizing damage to the appearance of the secondary battery.

### TECHNICAL SOLUTION

A plurality of secondary batteries may be loaded on a secondary battery tray according to an embodiment of the present disclosure. The secondary battery tray may include a bottom portion; and a plurality of guide lips that is located above the bottom portion, is configured to erect and support the secondary battery, and faces each other. The guide lip may include a contact portion configured to contact and support the secondary battery; and a non-contact portion that is located outside the contact portion, has a thinner thickness than the contact portion, and does not contact the secondary battery.

The thickness of the non-contact portion may gradually become thinner as it goes outward along the length direction of the guide lip.

The angle of an inclined surface forming the outer surface of the non-contact portion may be 0.5° to 1° with respect to a surface virtually extending along the length direction of the contact portion.

The non-contact portion may face a portion of an end side in the length direction of a cup portion of the secondary battery with respect to the thickness direction of the secondary battery.

The non-contact portion may be formed to have a length of 10 mm to 50 mm with respect to the length direction of the secondary battery.

Both inclined surfaces forming both surfaces of the non-contact portion may be formed in shapes symmetrical to each other.

The inclined surface forming the outer surface of the non-contact portion may be formed to be continuously connected to the outer surface of the contact portion along the length direction of the guide lip.

The non-contact portion may have a constant thickness along the length direction of the guide lip.

The outer surface of the non-contact portion may be formed to be stepped with respect to the outer surface of the contact portion.

Both surfaces of the upper end portion of the guide lip may be formed to be inclined in a direction closer to each other as it goes upward.

The secondary battery tray may further include a plurality of support portions protruding from the bottom portion and extending parallel to the guide lip, at least a portion of which is located between the bottom portion and the guide lip.

A heat dissipation groove may be formed between the plurality of support portions.

The width of the guide lip may be narrower than the width of the upper surface of the support portion.

The support portion may include a first inclined surface and a second inclined surface provided on both sides of the support portion and inclined in a direction away from each other as it goes downward, wherein the first inclined surface may be formed to have a steeper slope than the second inclined surface.

The secondary battery tray may further include a separation prevention protrusion protruding from the guide lip in the thickness direction of the guide lip. The separation prevention protrusion may be located outside the non-contact portion with respect to the length direction of the guide lip.

The separation prevention protrusion may include a first separation prevention protrusion protruding from one surface of the guide lip and a second separation prevention protrusion protruding from the other surface, wherein the protruding length of the first separation prevention protrusion may be shorter than the protruding length of the second separation prevention protrusion.

The secondary battery tray may further include a plurality of support portions protruding from the bottom portion and extending parallel to the guide lip, at least a portion of which is located between the bottom portion and the guide lip; and a separation prevention protrusion protruding from the guide lip in the thickness direction of the guide lip. The support portion may include a first inclined surface and a second inclined surface provided on both sides of the support portion and inclined in a direction away from each other as it goes downward. The separation prevention protrusion may include a first separation prevention protrusion protruding from one surface of the guide lip and a second separation prevention protrusion protruding from the other surface. The first inclined surface may be formed to have a steeper slope than the second inclined surface, and the protruding length of the first separation prevention protrusion may be shorter than the protruding length of the second separation prevention protrusion. A direction where the first separation prevention protrusion is disposed may correspond to a direction where the first inclined surface is disposed, and a direction where the second separation prevention protrusion is disposed may correspond to a direction where the second inclined surface is disposed.

### ADVANTAGEOUS EFFECTS

The secondary battery tray according to the present disclosure allows the activation process to proceed in a state in which the area where the holding unit formed on the activation tray contacts the secondary battery in the primary activation process does not contact the secondary battery in the secondary activation process, so that the problem of damage to the appearance caused by the overlapping contact of the tray and the secondary battery may be reduced.

### BRIEF DESCRIPTION OF THE DRAWINGS

FIG. 1 is a perspective view of an activation tray and a secondary battery in a primary activation process.
FIG. 2 is a perspective view of a secondary battery tray and a secondary battery according to an embodiment of the present disclosure.
FIG. 3 is an enlarged view of part 'A' of FIG. 2 when viewed from above.
FIG. 4 is a vertical cross-sectional view schematically showing a secondary battery accommodated between the guide lips shown in FIG. 3.
FIG. 5 is a perspective view of a guide lip according to an embodiment of the present disclosure.
FIG. 6 is a perspective view of a guide lip according to another embodiment of the present disclosure.

### DETAILED DESCRIPTION

Hereinafter, the present disclosure will be described in more detail with reference to the drawings. However, the following drawings are intended to facilitate understanding of the present disclosure and are only an embodiment of the present disclosure, and the scope of the present disclosure is not limited to what is shown in the drawings. In addition, in the following drawings, the same reference numerals refer to the same components, and some components may be exaggerated, reduced, or omitted to facilitate understanding of the present disclosure.

In addition, it should be understood that the terms or words used in the present disclosure and the appended claims should not be construed as limited to general and dictionary meanings, but rather interpreted based on the meanings and concepts corresponding to the technical aspect of the present disclosure on the basis of the principle that the inventor is allowed to define terms appropriately for the best explanation.

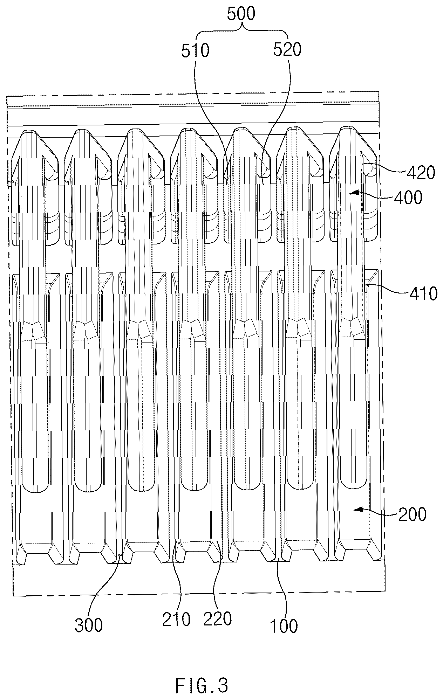

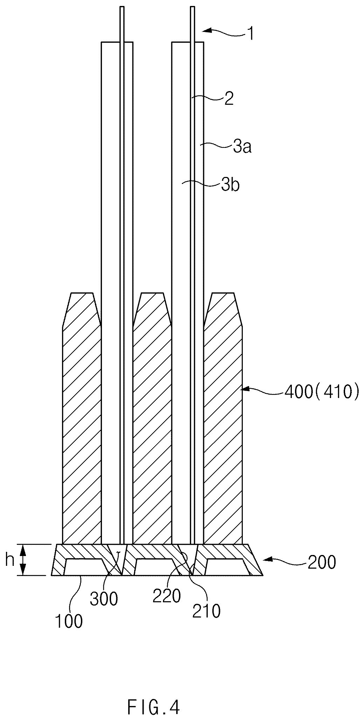

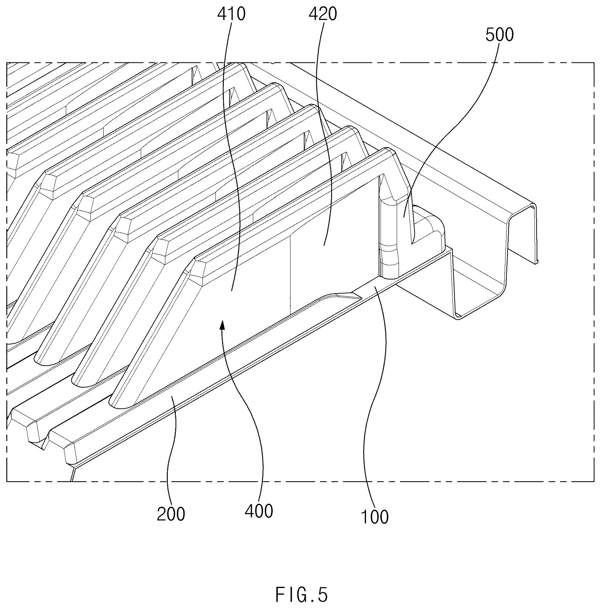

FIG. 2 is a perspective view of a secondary battery tray and a secondary battery according to an embodiment of the present disclosure, FIG. 3 is an enlarged view of part 'A' of FIG. 2 when viewed from above, FIG. 4 is a vertical cross-sectional view schematically showing a secondary battery accommodated between the guide lips shown in FIG. 3, and FIG. 5 is a perspective view of a guide lip according to an embodiment of the present disclosure.

Referring to FIG. 2, the secondary battery tray 10 and the secondary battery 1 according to the present disclosure are shown.

A plurality of secondary batteries 1 may be loaded on the secondary battery tray 10. More specifically, the secondary battery tray 10 may be a tray for aligning and accommodating a plurality of secondary batteries 1 in an activation process of the secondary battery 1 after a degassing process for discharging internal gas.

The secondary battery 1 may refer to a secondary battery in which a second activation process is performed after the primary activation process and the degassing process, and may be a pouch-type secondary battery, a cylindrical secondary battery, or a prismatic secondary battery. Preferably, it may refer to a pouch-type secondary battery. The secondary battery 1 may include an electrode assembly in which a negative electrode, a positive electrode, and a separator are repeatedly stacked, and a pouch case for accommodating the electrode assembly. The pouch case may have a cup portion 3 formed on one or both surfaces to accommodate the electrode assembly, and a sealing portion 2 formed to protrude by being sealed along the edge to seal the secondary battery. The sealing portion 2 may be formed on three or four side surfaces along the perimeter of the secondary battery 1.

The secondary battery tray 10 may include a bottom portion 100 and a guide lip 400 located above the bottom portion 100.

The secondary battery tray 10 is formed with an open top, and the bottom portion 100 may form the overall shape of the secondary battery tray 10. The bottom portion 100 may support the weight of a plurality of secondary batteries 1 aligned and accommodated in the secondary battery tray 10.

The secondary battery tray 10 may further include a support portion 200.

Referring to FIG. 3, the support portion 200 may be located above the bottom portion 100. The support portion 200 may protrude upward from the bottom portion 100 to have a predetermined height h. The support portion 200 may extend in one direction. The one direction may be parallel to the length direction of the secondary battery 1 supported by the support portion 200.

The secondary battery 1 may be accommodated by being sandwiched between the guide lips 400. In this case, the lower end of the secondary battery 1 may be supported in contact with the support portion 200.

At least a portion of the guide lip 400 may be located on the upper side of the support portion 200. That is, at least a portion of the support portion 200 may be located between the bottom portion 100 and the guide lip 400. The guide lip 400 and the support portion 200 may extend parallel to each other. The guide lip 400 may be formed to have a predetermined step with the support portion 200.

The support portion 200 may be formed in plurality and arranged at predetermined intervals.

The upper surface of each support portion 200 may be formed in a flat shape. The upper surface of the support portion 200 may contact the lower end of the secondary battery 1, more specifically, the lower end surface of the cup portion 3, and support the secondary battery 1. The support portion 200 may allow the secondary battery 1 to be spaced from the bottom portion 100 by the height h of the support portion 200.

Each support portion 200 may include a first inclined surface 210 and a second inclined surface 220 provided on both sides relative to the upper surface of the support portion 200 and inclined in a direction away from each other as it goes downward.

The first inclined surface 210 and the second inclined surface 200 may be connected to the bottom portion 100. The first inclined surface 210 and the second inclined surface 220 may be formed on surfaces of adjacent support portions 200 facing each other, respectively. More specifically, the first inclined surface 210 of one support portion 200 may face the second inclined surface 220 of another support portion 200 adjacent to the one support portion 200 in the horizontal direction.

For example, if any one support portion 200 is referred to as a first support portion and both support portions 200 adjacent to both sides of the first support portion are referred to as a second support portion and a third support portion, the first inclined surface 210 of the first support portion may face the second inclined surface 220 of the second support portion in the horizontal direction, and the second inclined surface 220 of the first support portion may face the first inclined surface 210 of the third support portion in the horizontal direction.

The first inclined surface 210 and the second inclined surface 220 of each support portion 200 may be formed to be inclined in a direction closer to other adjacent support portions 200 as it goes downward.

The first inclined surface 210 and the second inclined surface 220 may be formed to have different inclination angles with respect to the bottom portion 100. For example, the inclination angle formed by the first inclined surface 210 with respect to the bottom portion 100 may be steeper than the inclination angle formed by the second inclined surface 220 with respect to the bottom portion 100.

In the secondary battery 1, the cup portion 3 protruding from both side surfaces relative to the sealing portion 2 formed along the edge may have different thicknesses, or the cup portion 3 may be formed only on one side surface relative to the sealing portion 2. Hereinafter, for convenience of description, the case in which the cup portion 3 includes a first cup portion 3a and a second cup portion 3b protruding on both sides relative to the sealing portion 2, and the thickness of the second cup portion 3b is greater than the thickness of the first cup portion 3a, as shown in FIG. 4, will be described as an example.

The secondary battery 1 accommodated between the guide lips 400 may be arranged so that the thicknesses of the first and second cup portions 3a, 3b and the inclination angles of the first and second inclined surfaces 210, 220 correspond to each other. More specifically, the first inclined surface 210 may face the first cup portion 3a in the vertical direction, and the second inclined surface 220 may face the second cup portion 3b in the vertical direction. Much more specifically, the first inclined surface 210 may face the first cup portion 3a of one secondary battery 1 in the vertical direction, and the second inclined surface 220 may face the second cup portion 3b of the other secondary battery 1 in the vertical direction.

That is, the secondary battery 1 accommodated in the secondary battery tray 10 may be arranged so that the relatively thick cup portion 3b faces the second inclined surface 220 and the relatively thin cup portion 3a faces the first inclined surface 210.

By matching the arrangement directions of the plurality of secondary batteries 1 accommodated in this way, problems such as the sealing portion 2 formed on the lower end edge of the secondary battery 1 being bent in contact with the first inclined surface 210 and the second inclined surface 220 may be solved, and the quality of the secondary battery 1, which can vary depending on the arrangement direction of the secondary batteries in the charge/discharge process, OCV process, and the like, may be uniformized.

However, the present disclosure is not limited thereto, and the first inclined surface 210 and the second inclined surface 220 may be formed have the same inclination angle. In this case, the thicknesses of the first cup portion 3a and the second cup portion 3b protruding on both sides relative to the sealing portion 2 may be the same.

Meanwhile, a heat dissipation groove 300 may be formed between the plurality of support portions 200.

The heat dissipation groove 300 may be formed between adjacent support portions 200 as the support portion 200 forms a step with respect to the bottom portion 100.

When the sealing portion 2 is formed on four surfaces along the edge of the secondary battery 1, the sealing portion 2 formed on any one surface may be disposed in the heat dissipation groove 300. When the sealing portion 2 is formed on three surfaces along the edge of the secondary battery 1, the surface on which the sealing portion 2 is not formed may be disposed to face the heat dissipation groove 300.

The heat dissipation groove 300 may be formed in a space between the first inclined surface 210 and the second inclined surface 220 disposed to face each other in the support portions 200 adjacent to each other. That is, the heat dissipation groove 300 may be formed between the first inclined surface 210 of one support portion 200 and the second inclined surface 220 of the other support portion 200.

The heat dissipation groove 300 may be located below the secondary battery 1 accommodated in the secondary battery tray 10. Since the heat dissipation groove 300 forms a predetermined space below the cup portion 3 of the secondary battery 1, heat generated in the activation process of the secondary battery 1 may be easily discharged.

When the sealing portion 2 is formed on the four surfaces of the secondary battery 1, the secondary battery 1 may be arranged so that the sealing portion 2 disposed in the downward direction is inserted into the heat dissipation groove 300. The secondary battery 1 with the sealing portion 2 inserted into the heat dissipation groove 300 has the lower end of the cup portion 3 in contact with the upper surface of the support portion 200 and may be stably accommodated in the secondary battery tray 10.

Meanwhile, the guide lip 400 may be formed to protrude upward at a predetermined height on the upper surface of the support portion 200 so that the secondary battery 1 accommodated in the secondary battery tray 10 may be accommodated in a vertically erected state. The guide lip 400 may support the vertically erected and inserted secondary battery 1 from both sides.

The width of the guide lip 400 may be narrower than the width of the upper surface of the support portion 200. Accordingly, the upper surface of the support portion 200 may protrude further on both sides than the guide lip 400. The upper surface of the support portion 200 protruding further on both sides than the guide lip 400 may function as a locking protrusion to prevent the cup portion 3 of the secondary battery 1 that is inserted upright from being inserted into the heat dissipation groove 300.

The guide lip 400 may be provided to be in surface contact with the cup portion 3 of the secondary battery 1 so as to disperse the pressure applied to the secondary battery 1.

The guide lip 400 may be formed on the upper surface of each support portion 200.

The interval between the plurality of guide lips 400 may be formed to be equal to or similar to the thickness of the secondary battery 1. Therefore, the secondary battery 1 may be vertically inserted between the plurality of guide lips 400 and erected.

The height of the guide lip 400 may be lower than the height of the secondary battery 1. In this regard, if the secondary battery 1 is shaking during the transportation thereof while accommodated in the secondary battery tray 10, there is a concern that the upper end of the guide lip 400 and the secondary battery 1 may collide, causing appearance defects, such as pressing the outer surface of the secondary battery 1. To prevent this concern, the upper end of the guide lip 400 may be formed to become thinner as it goes upward. That is, both surfaces of the upper end of the guide lip 400 may be formed to be inclined in a direction closer to each other as it goes upward. Accordingly, the impact that the secondary battery 1 may receive from the guide lip 400 may be cushioned.

The guide lip 400 may include a contact portion 410 and a non-contact portion 420. The contact portion 410 may be provided to contact and support the secondary battery 1. The non-contact portion 420 is located outside the contact portion 410 and may not be in contact with the secondary battery 1.

The contact portion 410 may have a sufficiently large area to prevent appearance defects of the secondary battery 1 by dispersing the impact that may be applied to the outer surface of the secondary battery 1, and may be provided to be in surface contact with the secondary battery 1. The thickness of the contact portion 410 may be constant along the length direction of the guide lip 400.

The non-contact portion 420 may be located outside the contact portion 410 with respect to the length direction of the guide lip 400. The thickness of the non-contact portion 420 may be thinner than the thickness of the contact portion 410. The non-contact portion 420 may be provided to form a predetermined interval without contacting a specific area of the secondary battery 1. That is, when the secondary battery 1 is in contact with the contact portion 410, a predetermined interval may be formed between the non-contact portion 420 and the secondary battery 1.

The non-contact portion 420 may be located outside the contact portion 410 with respect to the length direction of the secondary battery 1.

The activation process of the secondary battery 1 may be performed in the order of a primary activation process, a degassing/resealing process, and a secondary activation process. In the primary activation process, the secondary battery B (see FIG. 1) prior to cutting is in a step before the degassing process, so that the pouch sheet may be formed in a shape extending long upward from the cup portion area. The activation tray T used in the primary activation process may include a holding unit U formed to extend upward to secure the elongated pouch sheet. Since the secondary battery B prior to cutting is pressurized in the area in contact with the holding unit U of the activation tray T in the primary activation process, the possibility of defects in the appearance of the battery increases if the secondary battery 1 accommodated in the secondary battery tray 10 used in the second activation process is redundantly pressurized again in the area pressurized in the primary activation process. Accordingly, the non-contact portion 420 may be formed on the guide lip 400 of the secondary battery tray 10 so that the area pressurized by the activation tray T in the primary activation process is not redundantly pressurized in the second activation process. As a result, it is possible to reduce the problem of appearance defects caused by the secondary battery 1 being redundantly pressurized in the activation process.

The non-contact portion 420 may be formed to have a length of 10 mm to 50 mm with respect to the length direction of the secondary battery 1 so as to not overlap with the area where the holding unit U of the activation tray T is in contact with the secondary battery B prior to cutting.

In addition, the non-contact portion 420 may be formed to face a portion of the end side of the cup portion 3 of the secondary battery 1 in the length direction with respect to the thickness direction of the secondary battery 1 so as to not overlap with the area where the holding unit U of the activation tray T is in contact with the secondary battery B prior to cutting.

Referring to FIG. 5, the thickness of the non-contact portion 420 may gradually become thinner as it goes outward along the length direction of the guide lip 400. That is, the non-contact portion 420 may be provided with an inclined surface where the thickness of the guide lip 400 gradually becomes thinner as it goes outward along the length direction of the guide lip 400. In other words, an inclination may be formed in the non-contact portion 420 along the length direction of the guide lip 400 so that the thickness of the guide lip 400 gradually becomes thinner as it approaches the separation prevention protrusion 500 to be described later.

The outer surface of the non-contact portion 420 may be an inclined surface. Both inclined surfaces forming both surfaces of the non-contact portion 420 may have shapes symmetrical to each other. The non-contact portions 420 of the guide lips 400 adjacent to each other may face each other.

The non-contact portion 420 may be formed to be continuously connected along the length direction of the guide lip 400 with respect to the contact portion 410 so as to be connected to the contact portion 410. More specifically, the inclined surface of the non-contact portion 420 may be formed to be continuously connected to the outer surface of the contact portion 410.

The angle of the inclined surface of the non-contact portion 420 may be 0.1° to 5°, preferably 0.5° to 1°, with respect to the surface virtually extending along the length direction of the contact portion 410. If the angle of the inclined surface of the non-contact portion 420 is formed too large, the secondary battery 1 may be subject to intensive impact at the point where the contact portion 410 and the non-contact portion 420 meet, which may cause a concern of damage to its appearance. In order to prevent this concern, the angle of the inclined surface of the non-contact portion 420 may be formed at an appropriate angle of 0.1° to 5° with respect to the surface virtually extending along the length direction of the contact portion 410, thereby minimizing the impact that the secondary battery 1 may receive.

Meanwhile, the secondary battery tray 10 may further include a separation prevention protrusion 500 protruding in the thickness direction of the guide lip 400. The separation prevention protrusion 500 may be located outside the non-contact portion 420 in the length direction of the guide lip 400. For example, the separation prevention protrusion 500 may be formed at the end portion of the guide lip 400 in the length direction.

The separation prevention protrusion 500 may prevent the secondary battery 1 accommodated in the secondary battery tray 10 from being separated outward in the length direction of the guide lip 400.

Referring to FIG. 3, the separation prevention protrusion 500 may include a first separation prevention protrusion 510 protruding on one surface of the outer end portion of the guide lip 400 and a second separation prevention protrusion 520 protruding on the other surface of the outer end portion thereof.

The first separation prevention protrusion 510 and the second separation prevention protrusion 520 may be formed to have different protruding lengths with respect to the guide lip 400. For example, the protruding length of the first separation prevention protrusion 510 may be formed to be shorter than the protruding length of the second separation prevention protrusion 520.

A direction where the first separation prevention protrusion 510 is disposed may correspond to a direction where the first inclined surface 210 is disposed, and a direction where the second separation prevention protrusion 520 is disposed may correspond to a direction where the second inclined surface 220 is disposed. More specifically, the first inclined surface 210 may be provided on one side of the support portion 200 in the width direction, and the first separation prevention protrusion 510 may protrude on one side of the guide lip 400 in the width direction. The second inclined surface 220 may be provided on the other side of the support portion 200 in the width direction, and the second separation prevention protrusion 520 may protrude on the other side of the guide lip 400 in the width direction.

More specifically, the first separation prevention protrusion 510 may face the first cup portion 3a of the secondary battery 1, and the second separation prevention protrusion 510 may face the second cup portion 3b of the secondary battery 1. Much more specifically, in the length direction of the guide lip 400, the first separation prevention protrusion 510 may face the first cup portion 3a of one secondary battery 1, and the second separation prevention protrusion 510 may face the second cup portion 3b of another secondary battery 1.

However, the present disclosure is not limited thereto, and the first separation prevention protrusion 510 and the second separation prevention protrusion 220 may also be formed to have the same protruding length. In this case, the thicknesses of the first cup portion 3a and the second cup portion 3b protruding on both sides relative to the sealing portion 2 may be the same.

Since the guide lip 400 is formed in plurality and adjacent guide lips 400 are arranged to face each other, the first separation prevention protrusion 510 formed at the end portion of one guide lip 400 may face the second separation prevention protrusion 520 formed at the end portion of the other guide lip 400 adjacent to the one guide lip 400.

The first separation prevention protrusion 510 and the second separation prevention protrusion 520 facing each other may be spaced apart from each other at a predetermined interval. The interval between the first separation prevention protrusion 510 and the second separation prevention protrusion 520 facing each other may be shorter than the thickness of the secondary battery 1, and may be longer than the thickness of the sealing portion 2 formed along the edge of the secondary battery 1. Accordingly, the sealing portion 2 of the secondary battery 1 to be accommodated in the secondary battery tray 10 may be disposed between the first separation prevention protrusion 510 and the second separation prevention protrusion 520 facing each other.

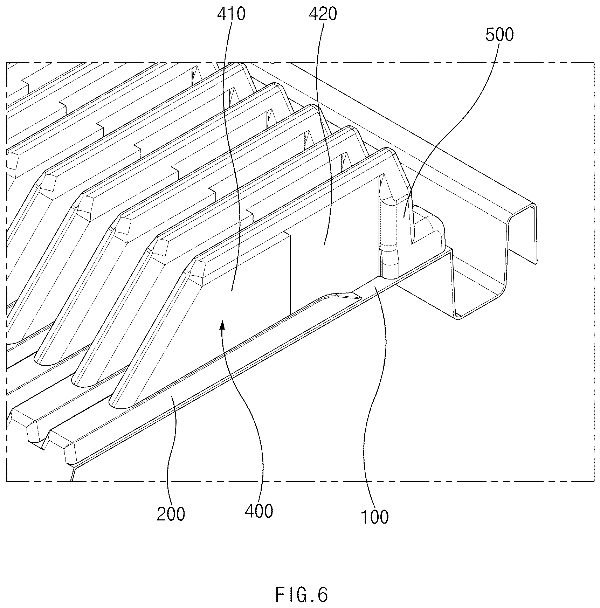

FIG. 6 is a perspective view of a guide lip according to another embodiment of the present disclosure.

Hereinafter, content overlapping with the above-described content may be used, and the description will focus on differences.

Referring to FIG. 6, the non-contact portion 420 according to another embodiment of the present disclosure may be formed to be stepped with respect to the contact portion 410. More specifically, the outer surface of the non-contact portion 420 may be formed to be stepped with respect to the outer surface of the contact portion 410.

The thickness of the non-contact portion 420 may be thinner than the thickness of the contact portion 410. The thickness of the non-contact portion 420 may be formed to be constant along the length direction of the guide lip 400.

The non-contact portion 420 may be formed to form a predetermined interval from the secondary battery 1. The area where the holding unit U of the activation tray T is in contact with the secondary battery B prior to cutting in the primary activation process of the secondary battery 1 may not be in overlapping contact with the guide lip 400 in the secondary activation process by the non-contact portion 420. The contact portion 410 may be provided to contact the secondary battery 1 through an area of a predetermined width so as to prevent appearance defects of the secondary battery 1 by dispersing the impact that may be applied to the outer surface of the secondary battery 1.

Although the present technology has been described hereinabove with the above embodiments, the present technology is not limited thereto. The above embodiments may be modified or changed without departing from the intent and scope of the present technology, and persons having ordinary skill in the art will recognize that such modifications and changes also belong to the present technology.

**[List of Reference Numerals]**

| | | | |
|---|---|---|---|
| 10: | Secondary battery tray | 100: | Bottom portion |
| 200: | Step portion | 210: | First inclined surface |
| 220: | Second inclined surface | 300: | Heat dissipation groove |
| 400: | Guide lip | 410: | Contact portion |
| 420: | Non-contact portion | 500: | Separation prevention protrusion |
| 510: | First separation prevention protrusion | 520: | Second separation prevention protrusion |
| 600: | Middle guide | T: | Activation tray |
| U: | Holding unit | B: | Secondary battery prior to cutting |
| 1: | Secondary battery | 2: | Sealing portion |
| 3: | Cup portion | | |

## Claims

1. A secondary battery tray on which a plurality of secondary batteries are loaded, comprising:
a bottom portion; and
a plurality of guide lips that is located above the bottom portion, is configured to erect and support the secondary battery, and faces each other,
wherein the guide lip comprises:
a contact portion configured to contact and support the secondary battery; and
a non-contact portion that is located outside the contact portion, has a thinner thickness than the contact portion, and does not contact the secondary battery.

2. The secondary battery tray according to claim 1,
wherein the thickness of the non-contact portion gradually becomes thinner as it goes outward along a length direction of the guide lip.

3. The secondary battery tray according to claim 2,
wherein an angle of an inclined surface forming an outer surface of the non-contact portion is 0.5° to 1° with respect to a surface virtually extending along a length direction of the contact portion.

4. The secondary battery tray according to claim 1,
wherein the non-contact portion faces a portion of an end side in a length direction of a cup portion of the secondary battery with respect to the thickness direction of the secondary battery.

5. The secondary battery tray according to claim 1,
wherein the non-contact portion is formed to have a length of 10 mm to 50 mm with respect to a length direction of the secondary battery.

6. The secondary battery tray according to claim 2,
wherein both inclined surfaces forming both surfaces of the non-contact portion are formed in shapes symmetrical to each other.

7. The secondary battery tray according to claim 2,
wherein an inclined surface forming an outer surface of the non-contact portion is formed to be continuously connected to an outer surface of the contact portion along the length direction of the guide lip.

8. The secondary battery tray according to claim 1,
wherein the non-contact portion has a constant thickness along a length direction of the guide lip.

9. The secondary battery tray according to claim 8,
wherein an outer surface of the non-contact portion is formed to be stepped with respect to an outer surface of the contact portion.

10. The secondary battery tray according to claim 1,
wherein both surfaces of the upper end portion of the guide lip are formed to be inclined in a direction closer to each other as it goes upward.

11. The secondary battery tray according to claim 1, further comprising:
a plurality of support portions protruding from the bottom portion and extending parallel to the guide lip, at least a portion of which is located between the bottom portion and the guide lip.

12. The secondary battery tray according to claim 11,
wherein a heat dissipation groove is formed between the plurality of support portions.

13. The secondary battery tray according to claim 11,
wherein a width of the guide lip is narrower than a width of an upper surface of the support portion.

14. The secondary battery tray according to claim 11,
wherein the support portion comprises a first inclined surface and a second inclined surface provided on both sides of the support portion and inclined in a direction away from each other as it goes downward,
wherein the first inclined surface is formed to have a steeper slope than the second inclined surface.

15. The secondary battery tray according to claim 1, further comprising:
a separation prevention protrusion protruding from the guide lip in the thickness direction of the guide lip,
wherein the separation prevention protrusion is located outside the non-contact portion with respect to a length direction of the guide lip.

16. The secondary battery tray according to claim 15,
wherein the separation prevention protrusion comprises a first separation prevention protrusion protruding from one surface of the guide lip and a second separation prevention protrusion protruding from the other surface,
wherein a protruding length of the first separation prevention protrusion is shorter than a protruding length of the second separation prevention protrusion.

17. The secondary battery tray according to claim 1, further comprising:
a plurality of support portions protruding from the bottom portion and extending parallel to the guide lip, at least a portion of which is located between the bottom portion and the guide lip; and
a separation prevention protrusion protruding from the guide lip in the thickness direction of the guide lip,
wherein the support portion comprises a first inclined surface and a second inclined surface provided on both sides of the support portion and inclined in a direction away from each other as it goes downward, and
the separation prevention protrusion comprises a first separation prevention protrusion protruding from one surface of the guide lip and a second separation prevention protrusion protruding from the other surface,
wherein the first inclined surface is formed to have a steeper slope than the second inclined surface,
a protruding length of the first separation prevention protrusion is shorter than a protruding length of the second separation prevention protrusion, and
a direction where the first separation prevention protrusion is disposed corresponds to a direction where the first inclined surface is disposed, and a direction where the second separation prevention protrusion is disposed corresponds to a direction where the second inclined surface is disposed.
